# NOUVEAU FASCICULE DE BREVET EUROPEEN

(11) **EP 3 812 736 B2**
(45) Date de publication et mention de la décision concernant l'opposition: **12.08.2026**
(45) Mention de la délivrance du brevet: 07.09.2022
(21) Numéro de dépôt: 20203226.4
(22) Date de dépôt: 22.10.2020
(51) Int. Cl.: G01M 13/045, G01M 13/028

(54) **PROCÉDÉ ET SYSTÈME POUR ESTIMER L'USURE D'UNE MACHINE TOURNANTE COMPORTANT UN ROULEMENT**
VERFAHREN UND SYSTEM ZUM ABSCHÄTZEN DES VERSCHLEISSES EINER DREHMASCHINE, DIE EIN LAGER UMFASST
METHOD AND SYSTEM FOR ESTIMATING THE WEAR OF A ROTATING MACHINE COMPRISING A BEARING

(30) Priorité: 23.10.2019 FR 1911866
(43) Date de publication de la demande: 28.04.2021
(73) Titulaire: ALSTOM Holdings, 93400 Saint-Ouen-sur-Seine (FR)
(72) Inventeur: TOBON-MEJIA, Diego, Alejandro, 75015 Paris (FR)
(74) Mandataire: Lavoix

(56) Documents cités:
- EP-A1- 3 260 836
- WO-A1-2009/138106
- WO-A2-02/073150
- PANKAJ GUPTA ET AL: "Fault detection analysis in rolling element bearing: A review", MATERIALS TODAY: PROCEEDINGS, vol. 4, no. 2, 2 January 2017 (2017-01-02), NL, pages 2085 - 2094, XP055705897, ISSN: 2214-7853, DOI: 10.1016/j.matpr.2017.02.054
- AZEEZ NASEEL IBNU ET AL: "Detection of rolling element bearing defects by vibration signature analysis: A review", 2014 ANNUAL INTERNATIONAL CONFERENCE ON EMERGING RESEARCH AREAS: MAGNETICS, MACHINES AND DRIVES (AICERA/ICMMD), IEEE, 24 July 2014 (2014-07-24), pages 1 - 5, XP032648215, DOI: 10.1109/AICERA.2014.6908270

## Description

La présente invention concerne un procédé pour estimer l'usure d'une machine tournante comportant un roulement. La présente invention concerne également un système mécanique comprenant une machine tournante comprenant au moins un roulement, ainsi qu'un dispositif électronique de détection prévu pour mettre en œuvre ce procédé.

La présente invention se rapporte au domaine de la détection de défaillances et de la maintenance prédictive, particulièrement appliquées aux roulements placés sur des machines tournantes.

Les machines tournantes, par exemple les moteurs électriques, peuvent être munies de roulements, tels que des roulements à billes ou à rouleaux, qui assurent le mouvement relatif de rotation entre deux pièces desdites machines. Cependant, les roulements ont une durée de vie limitée, notamment due aux vibrations induites par les mouvements de la machine.

Lorsqu'un roulement arrive en fin de vie, il cède, ce qui peut causer des problèmes, comme la rupture de pièces de la machine et des blessures chez les opérateurs. Il est donc nécessaire de contrôler, tout au long de leur fonctionnement, la santé des roulements afin de savoir quand arrêter la machine et changer préventivement le roulement pour éviter d'arriver à la rupture du roulement.

EP-2 365 310-B1 prévoit une méthode et un système pour détecter les dommages du roulement à billes dès leur apparition. Pour ce faire, un premier capteur de particules est disposé dans le système pour estimer la quantité de débris éjecté par le roulement défectueux dans de l'huile. Le capteur stocke les informations de manière à mémoriser la quantité de particules éjectées dans le temps. Ainsi, des premiers indicateurs de condition basés sur les débris présents dans l'huile du roulement peuvent être déterminés. Ces premiers indicateurs sont complémentés par des seconds indicateurs basés sur les vibrations du roulement.

Cependant, cette solution ne permet pas d'avoir une évaluation fiable de la santé du roulement. De plus, les indicateurs calculés ne sont pas toujours faciles à exploiter et à analyser.

WO 02/073150 A2 prévoit une méthode pour analyser les vibrations émises par une machine tournante.

Cependant, cette méthode conduit à une analyse simple des vibrations émises par la machine tournante et n'est donc pas satisfaisante pour détecter tous les défauts pouvant se produire sur une machine tournante.

C'est à ces inconvénients qu'entend plus particulièrement remédier l'invention en proposant un procédé et un système améliorés pour détecter l'usure d'un roulement associé à une machine tournante.

A cet effet, l'invention concerne un procédé selon la revendication 1.

Grâce à l'invention, la dissociation du signal mesuré en fonction des fréquences permet d'isoler les fréquences utiles au calcul du premier ensemble de données, relatif au domaine temporel, et des fréquences utiles au calcul du deuxième ensemble de données relatif au domaine fréquentiel. Cela permet de calculer un indice de santé pouvant être exploité plus facilement et plus utilement pour de la maintenance prédictive.

Selon des aspects avantageux mais non obligatoires de l'invention, un tel procédé peut incorporer une ou plusieurs des caractéristiques suivantes, prises selon toute combinaison techniquement admissible :
- Le premier intervalle est l'intervalle [10Hz, 1kHz] et le deuxième intervalle est l'intervalle [10Hz, 10kHz].
- Le calcul du deuxième signal comporte une analyse cyclo-stationnaire où la cohérence cyclique du spectre du deuxième signal est analysée, et dont le résultat est l'enveloppe du spectre de l'accélération du signal mesuré.
- L'étape e) comprend une extrapolation, comportant le calcul d'au moins une valeur future de l'indice de santé à partir d'au moins une partie des indices de santé calculés précédemment, et l'estimation de la durée de vie restante du roulement en comparant ladite au moins une valeur future de l'indice de santé à au moins une limite prédéfinie.
- Le procédé comprend l'émission d'une alerte par le dispositif de détection si l'indice de santé dépasse une desdites valeurs limites prédéfinies.
- La distance statistique est une distance séparant les éléments de calcul extraits de l'ensemble de données de référence, notamment une distance de Mahalanobis.
- Les étapes a) à e) sont mises en œuvre périodiquement avec une périodicité prédéfinie.

L'invention concerne également un système mécanique selon la revendication 8.

L'invention sera mieux comprise et d'autres avantages de celle-ci apparaîtront plus clairement à la lumière de la description qui va suivre, d'un procédé pour estimer l'usure d'une machine tournante comportant au moins un roulement et d'un système mécanique comprenant un dispositif électronique de détection prévu pour mettre en œuvre ce procédé pour estimer l'usure d'une machine tournante comportant un roulement, faite en référence aux dessins, dans lesquels :
[Fig 1] la figure 1 est une vue schématique d'un système mécanique comprenant une machine tournante, comportant des roulements, le système mécanique comprenant également un dispositif électronique de détection d'un défaut selon un mode de réalisation de l'invention ;
[Fig 2] la figure 2 est un schéma d'un procédé pour estimer l'usure de la machine tournante et du roulement de la figure 1 ;
[Fig 3] la figure 3 est un graphique représentant un exemple de l'évolution d'un indice de santé du roulement en fonction du temps, calculé au moyen du procédé de la figure 2 ; et
[Fig 4] la figure 4 est un graphique représentant un exemple d'une extrapolation de l'indice de santé, calculé au moyen du procédé de la figure 2, du roulement en fonction du temps.

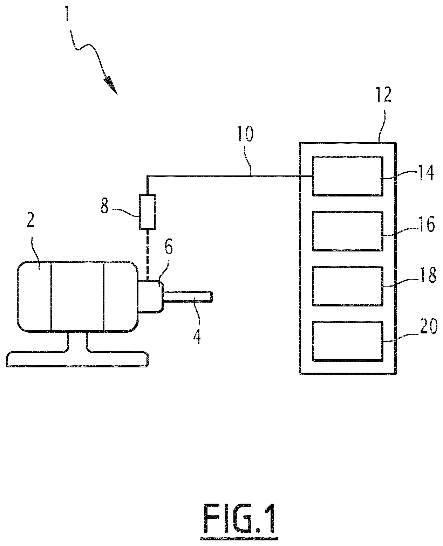

La figure 1 représente schématiquement un système mécanique 1 selon l'invention.

Le système mécanique 1 comprend une machine tournante 2, comprenant un arbre 4, sur lequel est monté un roulement 6.

Par exemple, la machine tournante 2 est un moteur électrique, tel qu'un moteur de traction ferroviaire, et le roulement 6 est un roulement à billes ou à rouleaux ou à aiguilles.

De manière générale, le système mécanique 1 peut comprendre plusieurs roulements 6, par exemple deux ou cinq roulements.

En variante, la machine tournante 2 peut être autre chose qu'un moteur électrique. Il peut s'agir d'un compresseur ou d'une pompe, par exemple au sein d'un système de climatisation ou d'un circuit hydraulique.

Les roulements, notamment les roulements à billes, ont une durée de vie limitée et un rôle clé dans le bon fonctionnement du système mécanique 1 auquel ils appartiennent. Ainsi, lorsqu'un roulement se rompt, il met toute la structure du système mécanique 1 en danger. Il est donc nécessaire de contrôler la santé du roulement 6 afin d'être apte, en cas d'usure trop importante du roulement 6, à le changer dans des délais appropriés.

A cet effet, le système mécanique 1 comprend également un dispositif électronique de détection 12 pour détecter préventivement un défaut du roulement 6.

Selon des modes de réalisation, le système de détection comporte un capteur 8, destiné à mesurer les vibrations de la machine tournante 2 et du roulement 6.

Le capteur 8 est un accéléromètre connecté au dispositif électronique de détection 12 par une liaison de données 10. Le capteur 8 est, par exemple, associé au roulement 6.

En variante, le capteur 8 comprend tout type de dispositif adapté à la mesure de vibration, comme, par exemple, une jauge de déformation ou un capteur de déplacement laser.

Dans l'exemple illustré, le dispositif électronique de détection 12 comprend un module d'acquisition de données 14, relié au capteur 8 par le biais de la liaison de données 10, un processeur 16, une mémoire 18 et une interface de communication 20.

Le module d'acquisition de données 14 est programmé pour recueillir les données du capteur 8 concernant les vibrations du roulement 6. Ce module d'acquisition de données 14 peut, par exemple, comprendre un circuit de conditionnement de signal ou un convertisseur analogique-numérique, ou tout autre équipement électronique similaire.

Le processeur 16 peut, par exemple être un microcontrôleur programmable, un microprocesseur, ou tout équipement similaire.

La mémoire 18 peut comprendre une mémoire morte (ROM) et/ou une mémoire vive (RAM), et/ou une mémoire non volatile, telle qu'une mémoire Flash, une mémoire magnétique, ou une mémoire à changement de phase ou toute technologie de mémoire appropriée.

L'interface de communication 20 peut comprendre un écran d'affichage, ou un clavier, ou, par exemple, un écran tactile permettant à l'utilisateur du système mécanique 1 de rentrer des données dans l'interface et de donner des ordres au système mécanique 1 et de recevoir des informations sur le fonctionnement du système mécanique 1.

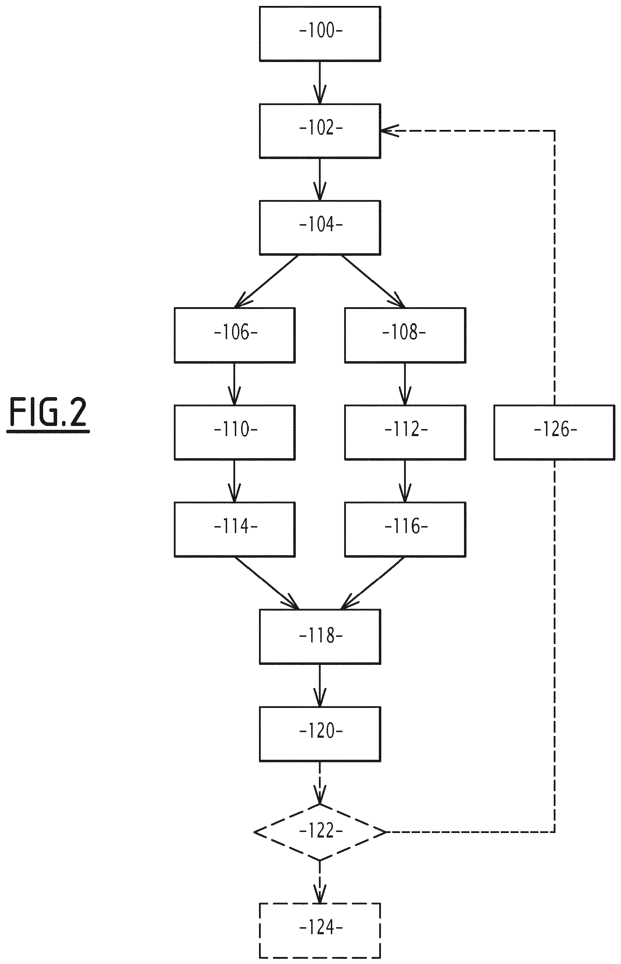

La figure 2 présente un exemple d'un procédé mis en œuvre par le dispositif électronique de détection 12, pendant le fonctionnement du système mécanique 1, pour détecter l'usure de la machine tournante 2 et du roulement 6.

Tout d'abord, dans une première étape 100, le système mécanique 1 est mis en marche, par exemple, par un opérateur, au moyen d'un dispositif d'actionnement non représenté sur les figures, qui peut être un bouton ou une commande du dispositif électronique de détection 12 rentrée dans l'interface de communication 20.

Puis, dans une étape 102, le capteur 8 acquiert des données brutes concernant les vibrations de la machine tournante 2 et du roulement 6.

Selon des modes de réalisation préférés, le capteur 8 acquiert des données périodiquement, selon une période prédéfinie par l'utilisateur. Dans les notations utilisées ci-après, « N » désigne le nombre d'échantillons de données acquis pendant le fonctionnement du système 1 et « i » désigne un indice identifiant l'un de ces échantillons.

En variante, le capteur 8 peut acquérir des données en continu.

Les données brutes acquises à l'étape 102 sont des données d'accélération A(i) situées dans un domaine fréquentiel.

Ensuite, dans une étape optionnelle 104, les données brutes acquises à l'étape 102 sont prétraitées et filtrées.

Le filtrage consiste à extraire les données utiles pour détecter les défauts des roulements. Cela permet de limiter la quantité de données à traiter dans les étapes suivantes et donc à alléger et accélérer le traitement des données.

Ensuite, le signal est dissocié en deux signaux appartenant à deux domaines différents.

Parmi ces signaux, un premier signal est représentatif d'accélérations A(i) associées à des fréquences comprises dans un premier intervalle de fréquences, par exemple l'intervalle [10Hz, 1kHz]. Ce signal est extrait dans une étape 106.

Un deuxième signal est représentatif d'accélérations A(i) associées à des fréquences comprises dans un deuxième intervalle de fréquences, par exemple l'intervalle [10Hz, 10kHz]. Ce signal est extrait dans une étape 108.

En variante, les bornes des premier et deuxième intervalles de fréquences peuvent être choisies différemment. Par exemple, suivant une variante, le premier intervalle peut être l'intervalle [0Hz, 1kHz] et le deuxième intervalle de fréquence peut être l'intervalle [1kHz, 10kHz].

Dans une étape 110, au moyen du dispositif électronique de détection 12, le premier signal est traité afin d'extraire automatiquement, à partir du signal mesuré par le capteur 8, un premier ensemble de données du domaine temporel.

Selon des exemples, une sous-étape optionnelle de prétraitement est mise en œuvre sur le premier signal, au cours de laquelle les fréquences inférieures à 10Hz du premier intervalle de fréquences sont supprimées et ledit signal est centré sur la fréquence autour de laquelle le premier intervalle est centré.

Puis une première intégration arithmétique dans le domaine fréquentiel est effectuée sur le signal ainsi conditionné qui est, avantageusement, une sinusoïde.

La première intégration arithmétique peut, par exemple, être effectuée suivant différentes méthodes et algorithmes connus, tels que la méthode de Poncelet ou l'algorithme Omega.

Une seconde intégration est ensuite effectuée dans le domaine temporel pour obtenir le premier ensemble de données qui comprend, dans cet exemple, des vitesses de vibration du roulement 6. La deuxième intégration arithmétique peut être effectuée suivant différentes méthodes et algorithmes connus, tels que la méthode de Poncelet ou l'algorithme Omega.

Les vitesses, c'est-à-dire la vélocité, des vibrations mesurées forment le premier ensemble de données.

Les vitesses de vibration à relativement basse fréquence sont intéressantes car elles sont un indicateur de fatigue direct, étant donné qu'elles prennent en compte aussi bien le déplacement que la fréquence et il n'est donc pas nécessaire de connaître la fréquence de vibration pour faire les calculs nécessaires à l'évaluation de l'état de santé de la machine tournante 2 et du roulement 6. De plus, la mesure des vibrations globales est un bon indicateur de l'état de santé global du système 1.

En parallèle, le deuxième signal est traité, dans une étape 112, afin d'extraire, à partir du signal mesuré d'accélération A(i), un deuxième ensemble de données dans le domaine fréquentiel.

En pratique, les défauts des roulements suivent une loi cyclo-stationnaire. Mathématiquement, un signal est dit cyclo-stationnaire si l'on retrouve une périodicité, que l'on peut appeler cycle, dans certaines de ses grandeurs statistiques, comme par exemple sa moyenne ou sa variance. Une machine tournante est dite cyclo-stationnaire si ses paramètres de fonctionnement, tels que la vitesse moyenne ou la durée de cycle du moteur, sont constants tout au long du fonctionnement de ladite machine.

Par exemple, le traitement du deuxième signal mis en œuvre dans l'étape 112 comporte une analyse cyclo-stationnaire où la cohérence cyclique du spectre du deuxième signal est analysée. Deux signaux sinusoïdaux sont dits cohérents s'ils sont de même fréquence et s'ils ont un déphasage constant. Dans le cas d'un signal cyclo-stationnaire, le spectre d'un signal est cycliquement cohérent si les différents cycles du signal ont une même fréquence et un déphasage constant.

Le résultat de l'analyse cyclo-stationnaire est une enveloppe Aₑ du signal mesuré d'accélération du deuxième intervalle de fréquences dans le domaine fréquentiel.

Ensuite, un spectre amélioré de l'enveloppe Aₑ, définie grâce à l'analyse cyclo-stationnaire, est déterminé. Pour ce faire, pour chaque fréquence, chaque harmonique est moyennée avec ses bandes latérales pour avoir une meilleure lisibilité. Le spectre de l'enveloppe Aₑ de l'accélération A(i) du signal mesuré forme le deuxième ensemble de données.

Ce traitement de données de relativement haute fréquence permet de localiser la contribution énergétique de la vibration due aux défauts de roulements.

Ces deux ensembles de données ainsi créés sont ensuite utilisés dans des étapes 114 et 116 pour extraire des premiers éléments de calculs et des deuxièmes éléments de calculs

Les premiers éléments de calculs de l'étape 114 comprennent une moyenne quadratique *V̅_̅{̅R̅M̅S̅}̅* du premier ensemble de données, définie par la fonction suivante : $\overline{{V}_{RMS}} = \sqrt{\frac{{\sum }_{i = 1}^{N} V {\left(i\right)}^{2}}{N}}$ où N est le nombre de mesures total prises par le capteur 8, i est un indice représentant l'une de ces mesures et V(i) est la vitesse du i^{ème} échantillon enregistré par le capteur 8.

Les deuxièmes éléments de calcul de l'étape 116 comprennent une moyenne quadratique d'harmoniques ${\overline{A}}_{RMS}^{F}$ du deuxième ensemble de données, définie par la fonction ci-dessous : ${\overline{A}}_{RMS}^{F} = {\sum }_{h = 1}^{H} \frac{{\left(max\left(\left[{A}_{e}\left({F}_{h}+S\right),{A}_{e}\left({F}_{h}-S\right)\right]\right)\right)}^{2}}{H}$ où max() est la fonction maximum, H est le nombre total d'harmoniques, h représente l'une des H harmoniques, Fₕ est la fréquence caractéristique de défaut des différents éléments du roulement 6 et S le coefficient de glissement du roulement 6. La fréquence Fₕ prend ses valeurs dans l'ensemble : [BPFO, BPFI, BSF, FTF], où BPFO est la fréquence de sortie d'une bille du roulement 6 par sa bague extérieure, BPFI est la fréquence de sortie d'une bille du roulement 6 par sa bague intérieure, BSF est la fréquence de rotation des billes et FTF est la fréquence fondamentale de train.

Les deuxièmes éléments de calcul comprennent donc un ensemble de moyennes quadratique d'harmoniques du deuxième ensemble de données. Les harmoniques de chaque moyenne sont associées à une fréquence de défaillance prédéfinie du roulement 6. Par exemple, les harmoniques correspondent chacune à un multiple d'une fréquence fondamentale correspondant à une fréquence de défaillance prédéfinie.

Cet ensemble de moyennes quadratiques est noté A_{M} et correspond à l'ensemble des fréquences pour lesquelles un défaut du roulement 6 est observé. Le vecteur A_{M} est détaillé dans la formule ci-dessous : $\vec{{A}_{M}} = \left[\begin{matrix}{\overline{A}}_{RMS}^{BPFO} \\ {\overline{A}}_{RMS}^{BPFI} \\ {\overline{A}}_{RMS}^{BSF} \\ {\overline{A}}_{RMS}^{FTF}\end{matrix}\right]$

L'accélération mesurée A(i) est utilisée pour établir des éléments de calcul qui comprennent une moyenne quadratique *A̅_̅{̅R̅M̅S̅}̅* des accélérations mesurées, par exemple donnée par la formule suivante : $\overline{{A}_{RMS}} = \sqrt{\frac{{\sum }_{i = 1}^{N} A {\left(i\right)}^{2}}{N}}$

Puis, lors d'une étape 118, les éléments de calcul des étapes 114 et 116 sont fusionnés et, de manière facultative, un poids est associé à un ou plusieurs de ces éléments afin de créer un vecteur d'éléments Fₑ, comme montré dans la formule ci-dessous : $\vec{{F}_{e}} = \vec{α} \left[\begin{matrix}\overline{{V}_{RMS}} \\ \overline{{A}_{RMS}} \\ {A}_{M}\end{matrix}\right] = \left[\begin{matrix}{α}_{1} \overline{{V}_{RMS}} \\ {α}_{2} \overline{{A}_{RMS}} \\ {α}_{3} {\overline{A}}_{RMS}^{BPFO} \\ {α}_{4} {\overline{A}}_{RMS}^{BPFI} \\ {α}_{5} {\overline{A}}_{RMS}^{BSF} \\ {α}_{6} {\overline{A}}_{RMS}^{FTF}\end{matrix}\right]$ où α est un vecteur de poids comprenant les poids α₁, α₂, α₃, α₄, α₅ et α₆ associés aux différents éléments de Fₑ. Un ou plusieurs de ces poids peuvent être égaux à 1.

En variante, la fusion des éléments de calcul dans le vecteur Fₑ n'utilise pas de vecteur de poids, le vecteur correspond ainsi à la formule ci-dessous : $\vec{{F}_{e}} = \left[\begin{matrix}\overline{{V}_{RMS}} \\ \overline{{A}_{RMS}} \\ {A}_{M}\end{matrix}\right] = \left[\begin{matrix}\overline{{V}_{RMS}} \\ \overline{{A}_{RMS}} \\ {\overline{A}}_{RMS}^{BPFO} \\ {\overline{A}}_{RMS}^{BPFI} \\ {\overline{A}}_{RMS}^{BSF} \\ {\overline{A}}_{RMS}^{FTF}\end{matrix}\right]$

Les composants de ce vecteur Fₑ d'éléments de fusion sont utilisés dans l'étape 120 pour calculer un indice de santé du roulement, noté « IS ». Cet indice de santé IS est déterminé en calculant, à partir de chacun des éléments de calcul extraits, une distance statistique par rapport à un ensemble de données de référence. En d'autres termes, on compare les données mesurées à des données de référence.

Dans l'exemple illustré, la distance statistique est une distance de Mahalanobis, définie par la fonction suivante : $IS = {D}^{2} \left(\vec{{F}_{e}}\right) = {\left(\vec{{F}_{e}}-\vec{μ}\right)}^{T} {S}^{- 1} \left(\vec{{F}_{e}}-\vec{μ}\right)$ où S⁻¹ est une matrice de covariance et µ est un vecteur comprenant la moyenne des données de référence.

En variante, la distance statistique pourrait être une distance des moindres carrés ou toute autre distance statistique appropriée.

Avantageusement, l'indice de santé IS peut être utilisé pour prédire une défaillance future du roulement 6, par exemple en extrapolant les valeurs futures de l'indice IS à partir des valeurs passées de l'indice de santé IS.

Par exemple, dans une étape 122, cet indice de santé IS est comparé à une ou plusieurs limites définies au préalable par un utilisateur.

Le procédé décrit ci-dessus, de l'étape 102 à l'étape 122, se répète périodiquement, selon une périodicité définie par l'utilisateur, par exemple avec la même périodicité que celle utilisée pour acquérir des données avec le capteur 8. Le procédé se répète tant que la machine tournante 2 est en fonctionnement.

En variante, le procédé peut être mis en œuvre de manière ponctuelle, sur demande de l'utilisateur.

Si l'indice de santé est supérieur à l'une des limites de l'étape 122, alors dans une étape 124, une alerte est donnée à l'utilisateur par le biais de l'interface de communication.

Par exemple, une première limite peut être une limite d'entrée en zone de vigilance, qui induit uniquement une alerte à l'utilisateur par le biais de l'interface de communication 20. Une deuxième alerte peut, par exemple, être une limite d'entrée en zone de danger, qui induit un arrêt du système mécanique 1.

En revanche, si l'indice de santé ne dépasse pas l'une de ces limites, dans une étape 126, les valeurs calculées à partir du signal mesuré par le capteur 8 de vibration sont utilisés pour extrapoler l'évolution de l'indice de santé dans le temps en calculant au moins une valeur future de l'indice de santé IS à partir d'au moins une partie des indices de santé IS calculés précédemment, et ainsi déterminer la durée de vie restante au roulement 6. Par exemple, cette information est ensuite donnée à l'opérateur, par exemple en affichant un message sur l'interface de communication 20 ou en envoyant un message à un appareil distant via l'interface de communication 20. Ensuite, le procédé retourne à l'étape 102. L'extrapolation de l'évolution de l'indice de santé IS sera expliquée plus en détail plus loin.

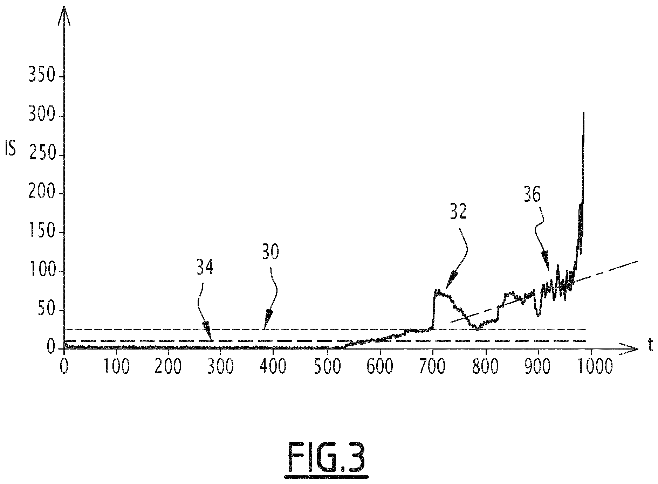

La figure 3 montre un exemple de l'évolution en fonction du temps (noté « t » en abscisse) de l'indice de santé IS (de valeur arbitraire, en ordonnée) calculé à l'étape 120 pour le roulement 6 par le procédé précédemment décrit. Cette évolution est illustrée sur la figure par la courbe 32. Sur le graphique sont illustrées, à titre d'exemple, deux limites prédéfinies : une première limite de faute 30 et une deuxième limite d'alarme 34.

Le temps utilisé pour décrire cette figure est arbitrairement noté en instants de mesure, chaque instant de mesure correspondant à un enregistrement ou échantillonnage de données par le capteur 8 et/ou par le module d'acquisition de données 14. En d'autres termes, chaque instant de mesure correspond à un point de mesure.

Les enregistrements sont réalisés à intervalles réguliers, par exemple périodiquement. Par exemple, l'intervalle entre deux mesures consécutives est choisi égal à dix minutes.

Dans l'exemple illustré, l'instant 1 correspondant à l'instant du premier enregistrement. L'instant 2 suivant correspond à l'enregistrement suivant fait dix minutes plus tard. De la même manière, l'instant 8 correspond, dans cet exemple, à un enregistrement fait 70 minutes après le premier enregistrement.

Comme on peut le voir, jusqu'à l'instant 533 environ, l'indice de santé IS reste proche de 0. Cela signifie que le roulement 6 est en bonne santé et qu'il n'y a pas de risque à l'utiliser. Ensuite, l'indice de santé IS commence à augmenter. Cela signifie que le roulement 6 commence à se dégrader.

A l'instant 700, il y a une forte dégradation de l'indice de santé IS, par exemple suite à une première défaillance mécanique. Cette défaillance peut être, par exemple, une perte de matériel, comme par exemple une perte de billes, un impact mécanique sur le roulement ou une contamination des surfaces des roulements par une substance extérieure.

Ceci peut se retrouver sur la courbe 32. En effet, les variations après l'instant 800 , repérées par la référence 36, suivent une courbe relativement stable qui, dans cet exemple, a une tendance quasi linéaire, c'est-à-dire qu'il n'y a pas de divergences et que l'évolution globale de la courbe est relativement monotone.

La figure 3 montre que l'indice de santé IS ainsi calculé respecte des conditions théoriques pour être utile dans le cadre d'un pronostic de défaillance pour la maintenance prévisionnelle.

La première de ces conditions théoriques est une bonne monotonie, c'est-à-dire une évolution relativement stable.

Selon la deuxième de ces conditions, il doit être possible de lire et exploiter et comprendre facilement une tendance de la courbe, qui doit donc être facile à extrapoler. Ici, cette tendance est linéaire.

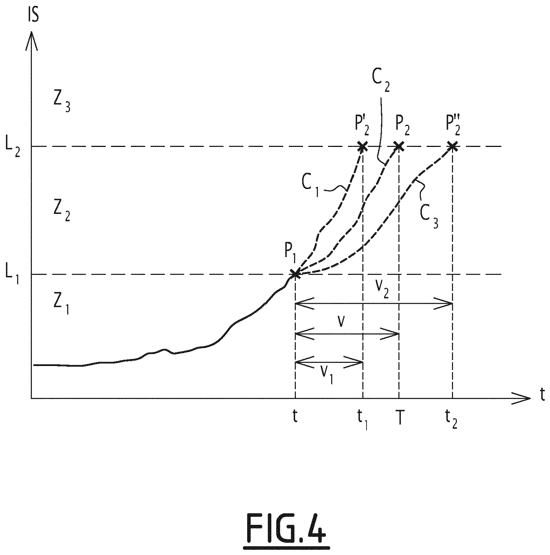

La figure 4 montre le résultat de l'étape 126 d'extrapolation de la figure 2.

Dans cet exemple, en abscisse se trouve le temps, noté « t », et en ordonnée se trouve l'indice de santé, noté « IS ». Trois zones sont définies sur ce graphique. Une première zone, notée « Z₁ », correspond aux valeurs de l'indice de santé IS qui sont inférieures ou égales à une première limite L₁, dite seuil de vigilance. Cette première zone Z₁ correspond, par exemple, à une zone de fonctionnement normal.

Une deuxième zone, notée « Z₂ », correspond aux valeurs de l'indice de santé IS qui sont supérieures au seuil de vigilance L₁ et inférieures ou égales à une deuxième limite L₂, dite seuil de danger. Cette deuxième zone Z₂ correspond, par exemple, à une zone de vigilance, c'est-à-dire une zone dans laquelle il faut porter une grande attention à l'état de santé du roulement 6.

Une troisième zone, notée « Z₃ », correspond aux valeurs de l'indice de santé IS supérieures au seuil de danger L₂. Cette troisième zone Z₃ correspond à une zone de danger, c'est-à-dire qu'il y a de forts risques que le roulement 6 se rompe lorsqu'il arrive dans cette zone.

La courbe située entre 0 et t est la courbe mesurée par le capteur 8 jusqu'au point P₁, qui ici définit le franchissement du seuil de vigilance L₁. Il est donc souhaitable d'estimer combien de temps le roulement 6 peut encore être utilisé sans danger.

Il est à noter que la position du P₁ à l'instant t est seulement donnée à titre d'exemple. Par exemple, P₁ est situé à l'intersection entre la courbe et le seuil de vigilance L₁, indépendamment du moment « t » auquel on fait l'extrapolation.

Lorsque le roulement 6 atteint le seuil de danger L₂, il peut se rompre et mener à l'endommagement du système mécanique 1 et ainsi blesser des opérateurs se trouvant à proximité du système mécanique 1.

Dans l'exemple de la figure 4, trois courbes C₁, C₂ et C₃ s'étendent après le point P₁ entre l'instant t et un instant t₂ future et représentent l'extrapolation de l'indice de santé IS calculé à l'étape 126 pour déterminer la durée de vie restante du roulement 6.

Un premier scénario est représenté par la courbe C₁. Dans ce scénario, la courbe C₁ atteint le seuil de danger L₂ à un instant t₁ futur. Le point P₂', représente le point de rupture du roulement 6. Ainsi, la durée de vie restant au roulement 6 à l'instant t, dans le premier scénario est V₁, qui est égal à la différence entre l'instant t₁ et l'instant t.

Un deuxième scénario est représenté par la troisième courbe C3. Dans ce scénario, la courbe C₃ atteint le seuil de danger L₂ à l'instant t₂. Le point P₂" représente le point de rupture du roulement 6 dans ce scénario. Dans ce scénario, la durée de vie restant au roulement 6 à l'instant t est V₂, qui est égal à la différence entre l'instant t₂ et l'instant t.

Enfin, un troisième scénario intermédiaire est représenté par la deuxième courbe C₂. Dans ce scénario, la courbe C₂ atteint le seuil de danger L₁ à un instant T future. Le point P₂ représente le point de rupture moyen du roulement 6. Ainsi, la durée de vie moyenne restant au roulement 6 à t dans ce scénario est V, qui est égal à la différence entre l'instant T et l'instant t.

En général, la durée de vie restante du roulement 6 est établie en comparant au moins une valeur future extrapolée de l'indice de santé IS à au moins l'une des valeurs limites prédéfinies.

Dans tous les cas, la durée moyenne V de vie restant au roulement 6 avant rupture est comprise entre la durée de vie V₁ du premier scénario et la durée de vie V₂ du deuxième scénario.

Cette extrapolation est faite grâce à un algorithme connu de localisation globale, par exemple un algorithme du type filtre de particules. En variante, un autre algorithme de localisation globale pourrait être utilisé, tel qu'une régression linéaire, ou un réseau neuronal artificiel, ou un algorithme de Markov caché, ou un filtre de Kalman, ou tout autre algorithme approprié.

De façon générale, cette extrapolation permet de prévoir à l'avance quand effectuer une maintenance sur le système mécanique 1 pour changer le roulement 6.

En effet, un intervalle de sécurité peut être choisi et le roulement 6 peut être changé lorsque cet intervalle est atteint.

Par exemple, une valeur maximale ISₘₐₓ peut être choisie, telle que, lorsque l'indice de santé du roulement 6 entre dans un intervalle, par exemple 5%, en dessous de la valeur ISₘₐₓ, le système mécanique 1 est arrêté pour pouvoir changer le roulement 6. La valeur ISₘₐₓ peut, par exemple, être égale à la valeur du seuil de danger L₂.

En variante, une valeur Vₘᵢₙ de durée de vie au premier scénario peut être choisie telle que, lorsque, dans l'étape 126 d'extrapolation, la durée de vie V₁ au premier scénario entre dans un intervalle, par exemple 5%, en-dessous de la valeur Vₘᵢₙ, le système mécanique 1 est arrêté pour pouvoir changer le roulement 6.

En effet, l'indice de santé IS est conçu de manière à suivre une distribution statistique de type Chi-2, ce qui permet d'associer à l'extrapolation et aux mesures des intervalles de confiance. Cela signifie que si la valeur de l'indice de santé IS et/ou la durée de vie V₁ est compris dans un intervalle de 5% autour des valeurs extrêmes ISₘₐₓ et/ou Vₘᵢₙ, la situation est hautement anormale, et donc dangereuse. De manière générale, l'intervalle de confiance dans lequel les valeurs de l'indice de santé IS et de la durée de vie V₁ doivent se trouver peut être choisi par l'utilisateur comme paramètre. Par exemple, l'utilisateur peut choisir un intervalle de 1% pour avoir une estimation plus précise ou un intervalle de 10% pour avoir un calcul plus rapide.

Le procédé pour estimer l'usure d'une machine tournante 2 comportant un roulement 6 décrit ci-dessus étant mis en œuvre de manière périodique. L'étape 126 d'extrapolation de l'évolution de la valeur de l'indice de santé IS du roulement 6 et de sa durée de vie V peut aussi être mise en œuvre périodiquement et les résultats peuvent être affichés sur l'interface de communication 20 après chaque calcul.

Ce procédé permet d'évaluer efficacement la santé du roulement 6 et de savoir quand le changer pour éviter tout accident, tout en évitant de changer trop souvent alors qu'il est encore fonctionnel.

La tendance quasi-linéaire de la courbe de l'indice de santé IS en fonction du temps, ou, en général, au moins monotone, rend cette courbe facile à analyser, interpréter et extrapoler. Ainsi, l'usure du roulement 6 est facilement détectée.

Le mode de réalisation et les variantes mentionnées ci-dessus peuvent être combinées entre eux pour générer de nouveaux modes de réalisation de l'invention

## Revendications

1. Procédé pour estimer l'usure d'une machine tournante (2) comportant au moins un roulement (6), **caractérisé en ce que** ce procédé comporte des étapes consistant à :
• a) mesurer (102) les vibrations de la machine tournante (2) pendant son fonctionnement, au moyen d'un capteur (8) de vibrations ;
• b) à partir du signal mesuré par ledit capteur, extraire (106, 108) automatiquement, au moyen d'un dispositif électronique de détection (12), un premier signal représentatif de composantes d'un premier intervalle de fréquences du signal de vibrations mesuré et un deuxième signal représentatif d'un deuxième intervalle de fréquences du signal de vibrations mesuré ;
• c) à partir du premier signal, calculer (110) un premier ensemble de données appartenant à un domaine temporel du premier signal et en extraire (114) des premiers éléments de calcul ;
• d) à partir du deuxième signal, calculer (112) un deuxième ensemble de données appartenant à un domaine fréquentiel du deuxième signal et en extraire (116) des deuxièmes éléments de calcul ; et
• e) déterminer (120) un indice de santé (IS) du roulement à partir de chacun des éléments de calcul extraits,
**en ce que** le signal mesuré est un signal d'accélération représentatif des vibrations mesurées, **en ce que** le premier ensemble de données comprend une vélocité des vibrations mesurées, **en ce que** le deuxième ensemble de données comprend l'enveloppe d'un spectre de l'accélération du signal mesuré, et **en ce que**, lors de l'étape e) (120), une distance statistique par rapport à un ensemble de données de référence est calculée pour chacun des éléments de calcul extraits,
les premiers éléments de calcul comprenant au moins une moyenne quadratique (*V_{RMS}*) du premier ensemble de données ; et les deuxièmes éléments de calcul comprenant au moins une moyenne quadratique ( ${\overline{A}}_{RMS}^{F}$) d'harmoniques du deuxième ensemble de données associées à une fréquence prédéfinie de défaillance du roulement (6).

2. Procédé selon la revendication 1, **caractérisé en ce que** le premier intervalle est l'intervalle [10Hz, 1kHz] et le deuxième intervalle est l'intervalle [10Hz, 10kHz] ou le premier intervalle est l'intervalle [0Hz, 1kHz] et le deuxième intervalle est l'intervalle [1kHz, 10kHz].

3. Procédé selon l'une quelconque des revendications précédentes, **caractérisé en ce que** le calcul (112) du deuxième signal comporte une analyse cyclo-stationnaire où la cohérence cyclique du spectre du deuxième signal est analysée, et dont le résultat est l'enveloppe du spectre de l'accélération du signal mesuré.

4. Procédé selon l'une quelconque des revendications précédentes, **caractérisé en ce que**, l'étape e) comprend :
• une extrapolation (126), comportant le calcul d'au moins une valeur future de l'indice de santé (IS) à partir d'au moins une partie des indices de santé calculés précédemment ;
• l'estimation de la durée de vie (V) restante du roulement (6) en comparant ladite au moins une valeur future de l'indice de santé à au moins une limite (L1, L2) prédéfinie.

5. Procédé selon la revendication 4, comportant l'émission d'une alerte (124) par le dispositif de détection (12) si l'indice de santé (IS) dépasse une desdites valeurs limites (L1, L2) prédéfinies.

6. Procédé selon l'une quelconque des revendications précédentes, **caractérisé en ce que** la distance statistique est une distance séparant les éléments de calcul extraits de l'ensemble de données de référence, notamment une distance de Mahalanobis.

7. Procédé selon l'une quelconque des revendications précédentes, **caractérisé en ce que** les étapes a) à e) sont mises en œuvre périodiquement avec une périodicité prédéfinie.

8. Système mécanique (1) comprenant :
• Une machine tournante (2), comportant un arbre (4) et au moins un roulement (6) monté sur cet arbre ;
• un capteur de vibration (8) pour mesurer les vibrations de la machine tournante ; et
• un dispositif électronique de détection (12) pour détecter un défaut du roulement,
le dispositif électronique de détection (12) étant programmé pour :
• a) mesurer (102) les vibrations de la machine tournante (2) pendant son fonctionnement, au moyen du capteur (8) de vibrations ;
• b) à partir du signal mesuré par ledit capteur, extraire (106, 108) automatiquement un premier signal représentatif de composantes d'un premier intervalle de fréquences du signal de vibrations mesuré et un deuxième signal représentatif d'un deuxième intervalle de fréquences du signal de vibrations mesuré ;
• c) à partir du premier signal, calculer (110) un premier ensemble de données appartenant à un domaine temporel du premier signal et en extraire (114) des premiers éléments de calcul ;
• d) à partir du deuxième signal, calculer (112) un deuxième ensemble de données appartenant à un domaine fréquentiel du deuxième signal et en extraire (116) des deuxièmes éléments de calcul ; et
• e) déterminer (120) un indice de santé (IS) du roulement à partir de chacun des éléments de calcul extraits,
le signal mesuré étant un signal d'accélération représentatif des vibrations mesurées, le premier ensemble de données comprenant une vélocité des vibrations mesurées et le deuxième ensemble de données comprenant l'enveloppe d'un spectre de l'accélération du signal mesuré, et, lors de l'étape e) (120), une distance statistique par rapport à un ensemble de données de référence étant calculée pour chacun des éléments de calcul extraits,
les premiers éléments de calcul comprenant au moins une moyenne quadratique (*V_{RMS}*) du premier ensemble de données ; et les deuxièmes éléments de calcul comprenant au moins une moyenne quadratique ( ${\overline{A}}_{RMS}^{F}$) d'harmoniques du deuxième ensemble de données associées à une fréquence prédéfinie de défaillance du roulement (6).

## Patentansprüche

1. Verfahren zum Schätzen des Verschleißes einer drehenden Maschine (2), umfassend mindestens ein Lager (6), **dadurch gekennzeichnet, dass** dieses Verfahren Schritte umfasst, die aus Folgendem bestehen:
• a) Messen (102) der Vibrationen der drehenden Maschine (2) während ihres Betriebs mittels eines Vibrationssensors (8);
• b) anhand des Signals, das von dem Sensor gemessen wird, automatisches Extrahieren (106, 108), mittels einer elektronischen Erfassungsvorrichtung (12), eines ersten Signals, das repräsentativ für Komponenten eines ersten Frequenzintervalls des gemessenen Vibrationssignals ist, und eines zweiten Signals, das repräsentativ für ein zweites Frequenzintervall des gemessenen Vibrationssignals ist;
• c) anhand des ersten Signals Berechnen (110) eines ersten Datensatzes, der zu einem Zeitbereich des ersten Signals gehört, und Extrahieren (114) von ersten Berechnungselementen daraus;
• d) anhand des zweiten Signals Berechnen (112) eines zweiten Datensatzes, der zu einem Frequenzbereich des zweiten Signals gehört, und Extrahieren (116) von zweiten Berechnungselementen daraus; und
• e) Bestimmen (120) eines Gesundheitsindex (IS) des Lagers anhand jedes der extrahierten Berechnungselemente,
dass das gemessene Signal ein Beschleunigungssignal ist, das für die gemessenen Vibrationen ist, dass der erste Datensatz eine Geschwindigkeit der gemessenen Vibrationen umfasst, dass der zweite Datensatz die Einhüllende eines Spektrums der Beschleunigung des gemessenen Signals umfasst, und dass in Schritt e) (120) für jedes der extrahierten Berechnungselemente ein statistischer Abstand in Bezug auf einen Referenzdatensatz berechnet wird,
wobei die ersten Berechnungselemente mindestens ein quadratischer Mittelwert (*V_{RMS}*) des ersten Datensatzes umfassen; und die zweiten Berechnungselemente mindestens einen quadratischen Mittelwert ( ${\overline{A}}_{RMS}^{F}$) von Oberschwingungen des zweiten Datensatzes umfassen, die mit einer vordefinierten Ausfallfrequenz des Lagers (6) assoziiert sind.

2. Verfahren nach Anspruch 1, **dadurch gekennzeichnet, dass** das erste Intervall das Intervall [10 Hz, 1 kHz] ist und das zweite Intervall das Intervall [10 Hz, 10 kHz] ist oder das erste Intervall das Intervall [0 Hz, 1 kHz] ist und das zweite Intervall das Intervall [1 kHz, 10 kHz] ist,

3. Verfahren nach einem der vorherigen Ansprüche, **dadurch gekennzeichnet, dass** die Berechnung (112) des zweiten Signals eine zyklostationäre Analyse umfasst, bei der die zyklische Kohärenz des Spektrums des zweiten Signals analysiert wird, und deren Resultat die Einhüllende des Spektrums der Beschleunigung des gemessenen Signals ist.

4. Verfahren nach einem der vorherigen Ansprüche, **dadurch gekennzeichnet, dass** der Schritt e) Folgendes umfasst:
• eine Extrapolation (126), umfassend das Berechnen mindestens eines zukünftigen Werts des Gesundheitsindex (IS) aus mindestens einem Teil der zuvor berechneten Gesundheitsindizes;
• Schätzen der verbleibenden Lebensdauer (V) des Lagers (6) durch Vergleichen des mindestens einen zukünftigen Werts des Gesundheitsindex mit mindestens einem vordefinierten Grenzwert (L1, L2).

5. Verfahren nach Anspruch 5, umfassend das Ausgeben eines Alarms (124) durch die Erfassungsvorrichtung (12), wenn der Gesundheitsindex (IS) einen der vordefinierten Grenzwerte (L1, L2) überschreitet.

6. Verfahren nach einem der vorherigen Ansprüche, **dadurch gekennzeichnet, dass** der statistische Abstand ein Abstand ist, der die aus dem Referenzdatensatz extrahierten Berechnungselemente voneinander trennt, insbesondere ein Mahalanobis-Abstand.

7. Verfahren nach einem der vorherigen Ansprüche, **dadurch gekennzeichnet, dass** die Schritte a) bis e) periodisch mit einer vordefinierten Periodizität durchgeführt werden.

8. Mechanisches System (1), umfassend:
• eine drehende Maschine (2), umfassend eine Welle (4) und mindestens ein Lager (6), das auf dieser Welle montiert ist;
• einen Vibrationssensor (8) zum Messen der Vibrationen der drehenden Maschine; und
• eine elektronische Erfassungsvorrichtung (12) zum Erfassen eines Defekts des Lagers,
wobei die elektronische Erfassungsvorrichtung (12) zu Folgendem programmiert ist:
• a) Messen (102) der Vibrationen der drehenden Maschine (2) während ihres Betriebs mittels des Vibrationssensors (8);
• b) anhand des Signals, das von dem Sensor gemessen wird, automatisches Extrahieren (106, 108) eines ersten Signals, das repräsentativ für Komponenten eines ersten Frequenzintervalls des gemessenen Vibrationssignals ist, und eines zweiten Signals, das repräsentativ für ein zweites Frequenzintervall des gemessenen Vibrationssignals ist;
• c) anhand des ersten Signals Berechnen (110) eines ersten Datensatzes, der zu einem Zeitbereich des ersten Signals gehört, und Extrahieren (114) von ersten Berechnungselementen daraus;
• d) anhand des zweiten Signals Berechnen (112) eines zweiten Datensatzes, der zu einem Frequenzbereich des zweiten Signals gehört, und Extrahieren (116) von zweiten Berechnungselementen daraus; und
• e) Bestimmen (120) eines Gesundheitsindex (IS) des Lagers anhand jedes der extrahierten Berechnungselemente,
wobei das gemessene Signal ein Beschleunigungssignal ist, das repräsentativ für die gemessenen Vibrationen ist, wobei der erste Datensatz eine Geschwindigkeit der gemessenen Vibrationen umfasst und der zweite Datensatz die Einhüllende eines Spektrums der Beschleunigung des gemessenen Signals umfasst, und wobei in Schritt e) (120) für jedes der extrahierten Berechnungselemente ein statistischer Abstand in Bezug auf einen Referenzdatensatz berechnet wird,
wobei die ersten Berechnungselemente mindestens ein quadratischer Mittelwert (*V_{RMS}*) des ersten Datensatzes umfassen; und die zweiten Berechnungselemente mindestens einen quadratischen Mittelwert ( ${\overline{A}}_{RMS}^{F}$) von Oberschwingungen des zweiten Datensatzes umfassen, die mit einer vordefinierten Ausfallfrequenz des Lagers (6) assoziiert sind.

## Claims

1. A method for estimating the wear of a rotating machine (2) including at least one bearing (6), **characterized in that** this method includes steps consisting of:
• a) measuring (102) the vibrations of the rotating machine (2) during its operation, using a vibration sensor (8);
• b) from the signal measured by said sensor, extracting (106, 108) automatically, using an electronic detection device (12), a first signal representative of components of a first frequency range of the measured vibration signal and a second signal representative of a second frequency range of the measured vibration signal;
• c) from the first signal, calculating (110) a first data set belonging to a time domain of the first signal and extracting (114) first calculation elements therefrom;
• d) from the second signal, calculating (112) a second data set belonging to a frequency domain of the second signal and extracting (116) second calculation elements therefrom; and
• e) determining (120) a health index (IS) of the bearing from each of the extracted calculation elements,
**in that** the measured signal is an acceleration signal representative of the measured vibrations, **in that** the first data set comprises a velocity of the measured vibrations, **in that** the second data set comprises the envelope of a spectrum of the acceleration of the measured signal, and **in that**, during step e) (120), a statistical distance relative to a reference data set is calculated for each of the extracted calculation elements, wherein
the first calculation elements comprise at least a root mean square (*V_{RMS}*) of the first data set; and the second calculation elements comprise at least one root mean square ( $\overline{{V}_{RMS}} = \sqrt{\frac{{\sum }_{i = 1}^{N} V {\left(i\right)}^{2}}{N}}$) of harmonics of the second data set associated with a predefined failure frequency of the bearing (6).

2. The method according to claim 1, **characterized in that** the first range is the range [10 Hz, 1 kHz] and the second range is the range [10 Hz, 10 kHz] or the first range is the range [0 Hz, 1 kHz] and the second range is the range [1 kHz, 10 kHz].

3. The method according to any one of the preceding claims, **characterized in that** the calculation (112) of the second signal includes a cyclostationary analysis where the cyclic coherence of the spectrum of the second signal is analyzed, and the result of the cyclostationary analysis is the envelope of the spectrum of the measured acceleration signal.

4. The method according to any one of the preceding claims, **characterized in that** step e) comprises:
• an extrapolation (126), including the calculation of at least one future value of the health index (IS) from at least part of the health index as previously calculated;
• the estimate of the remaining lifetime (V) of the bearing (6) by comparing said at least one future value of the health index to at least one predefined limit (L1, L2).

5. The method according to claim 5, including emitting an alert (124) via the detection device (12) if the health index (IS) exceeds one of said predefined limit values (L1, L2).

6. The method according to any one of the preceding claims, **characterized in that** the statistical distance is a distance separating the calculation elements extracted from the reference data set, in particular a Mahalanobis distance.

7. The method according to any one of the preceding claims, **characterized in that** steps a) to e) are implemented periodically with a predefined periodicity.

8. A mechanical system (1), comprising:
• A rotating machine (2), including a shaft (4) and at least one bearing (6) mounted on this shaft;
• a vibration sensor (8) in order to measure the vibrations of the rotating machine; and
• an electronic detection device (12) for detecting a defect of the bearing, the electronic detection device (12) being programmed to:
• a) measure (102) the vibrations of the rotating machine (2) during its operation, using the vibration sensor (8);
• b) from the signal measured by said sensor, automatically extract (106, 108) a first signal representative of components of a first frequency range of the measured vibration signal and a second signal representative of a second frequency range of the measured vibration signal;
• c) from the first signal, calculate (110) a first data set belonging to a time domain of the first signal and extract (114) first calculation elements therefrom;
• d) from the second signal, calculate (112) a second data set belonging to a frequency domain of the second signal and extract (116) second calculation elements therefrom; and
• e) determine (120) a health index (IS) of the bearing from each of the extracted calculation elements,
the measured signal being an acceleration signal representative of the measured vibrations, the first data set comprising a velocity of the measured vibrations, the second data set comprising the envelope of a spectrum of the acceleration of the measured signal, and, during step e) (120), a statistical distance relative to a reference data set being calculated for each of the extracted calculation elements, wherein
the first calculation elements comprise at least a root mean square (*V_{RMS}*) of the first data set; and the second calculation elements comprise at least one root mean square ${\overline{A}}_{RMS}^{F}$ of harmonics of the second data set associated with a predefined failure frequency of the bearing (6).
